# EUROPEAN PATENT SPECIFICATION

(11) **EP 3 433 452 B1**
(45) Date of publication and mention of the grant of the patent: **09.06.2021**
(21) Application number: 17716043.9
(22) Date of filing: 23.02.2017
(51) Int. Cl.: E04H 6/00, B62H 3/00

(54) **FACILITY FOR PARKING BICYCLES**
ANLAGE ZUM PARKEN VON FAHRRÄDERN
INSTALLATION DE STATIONNEMENT DE VÉLOS

(30) Priority: 23.03.2016 CZ 201632220 U
(43) Date of publication of application: 30.01.2019
(73) Proprietor: Vapos Spol. S.r.o., 506 01 Jicin (CZ)
(72) Inventor: BERNARD, Josef, 506 01 Jicín (CZ)
(74) Representative: Jeck, Anton
(86) International application number: PCT/CZ2017/000011
(87) International publication number: WO 2017/162219

(56) References cited:
- DE-U1- 9 420 039
- JP-A- H0 579 214
- JP-A- S6 164 967
- JP-A- H10 317 704
- JP-A- 2006 152 537
- JP-A- 2009 019 359

## Description

The technical solution relates to a facility according to claim 1 for parking bicycles and electric bicycles, which is created by assembling several towers interconnected by computer system, wherein each tower works independently.

Currently, bicycles and electric bicycles are parked at normal parking lots with reserved seats, to the bicycle racks. Or there are used different types of horizontal or vertical racks. The disadvantage of these solutions is the space requirements and the possibility of their alienation. Recently, for bicycles parking the towers are starting to be used.

There are known systems of overhead/above-ground and underground towers in Japan, Taiwan but also in the Czech Republic. The disadvantage of the parking towers is that the parking and out-parking is performed by one elevator and through one entrance (the door). It is a time-consuming and intake of the bicycle takes about 30 s and supply a further 30 s. In case of the capacity of the tower by 120 bicycles, it is I hour for receiving the bicycles and 1 hour for the supply of bicycles. From this it follows that long intervals of time to park and out-park the bicycles very limit the use of this system of the parking, and especially at a time when the towers meet more cyclists who are in a hurry. Disclosure of the invention The above deficiencies largely solves the proposed technical arrangement, which is a device for parking bicycles and electric bicycles consisting of two to twenty towers, when each tower has a door for loading and unloading of the bicycles, where before each door there are placed handrails that create the security corridor between the customer and bicycle and between the handrails there is placed homing bar for a bicycle. Behind the door there is placed the manipulator to safely intake and release the bicycles, further the separate elevator and at least six containers for the storage of bicycles, when each of the towers has above every door an information screen. The towers are connected by the cash box, supply machine and intake machine.

JP2009019359 discloses a two-wheel vehicle parking equipment with a storage base for housing the two-wheel vehicle, and a conveying unit for conveying the two-wheel vehicle onto the storage base from the side of a rear wheel. The storage base is provided with the erecting section for erecting the two-wheel vehicle by holding the rear wheel of the two-wheel vehicle. The conveying unit is equipped with a clamp section for holding a front wheel of the two-wheel vehicle, an advancing/retreating section for advancing/retreating the clamp section with respect to the storage base, a guide section for guiding the rear wheel of the two-wheel vehicle, the front wheel of which is held by the clamp section, to the storage base, and a stop position detecting section for detecting a stop position of the clamp section corresponding to the overall length of the two-wheel vehicle.

JPH0579214 refers to an entrance door through which a pallet on which a plurality of bicycles are loaded is shifted to a stationary rack by means of a lift is divided into one upper door 6 and lower doors 8 provided at every specified position. The doors 6, 8 are installed at every bicycle multistoried parking device which is formed into a unit by providing a number of stationary racks on both sides of the lift. The upper door 6 and only the lower door 8 of a specified position are opened by control of a control panel 12 to take a bicycle in or out. Parking of bicycles in others' places and the taking out of others' bicycles are prevented and the entrance of children of animals, etc., into the parking lot by mistake is prevented. The units are connected together to form a bicycle sky parking lot of a predetermined capacity.

JPS6164967 describes a multi level bike storage facility.

JPH10317704 teaches a storing body C having storing tables 1 for placing and supporting bicycles A in an erect posture in plural stages in the vertical direction is provided in such a manner as to be freely elevated for moving each storing table 1 to an in-and-out position corresponding to the in-and-out floor surface 2 for moving the bicycle A forward and backward to be put in and out the storing table 1.; Further, the respective storing tables are adapted to arrange plural bicycles in the cross direction to be placed and supported, and place and support the adjacent bicycles A with a difference in level so that the handles A1 of the adjacent bicycles A can be positioned to overlap up and down with a difference in level, and the storing table parts 1a, 1b corresponding to the respective bicycles A in the storing tables 1 are provided with the floor surfaces.

DE9420039 discloses a Parking facility for bicycles, with at least one holder for the bicycle, wherein the parking device has at least one shelf, the above and adjacent shelf shelves for pallets, each with a holder are provided, and that the Parking device has at least one storage and retrieval unit.

JP2006152537 teaches a bicycle parking facility which is formed of a plurality of stages of bicycle storage shelves 1 which are horizontally constructed at vertical intervals, and a bicycle carrying means 7 for carrying each bicycle in an erect position. Each bicycle storage shelf 1 includes a chain 3 elliptically endlessly revolving in the horizontal plane, and a plurality of bicycle holding means 4 attached to the chain 3 horizontally and at right angles, for holding the bicycles in the erect position. Each bicycle carrying means 7 includes an elevating machine 9 for elevating/lowering the bicycle to the bicycle storage shelf 1 in a predetermined stage, and a movably mounting machine 11 for storing/retreating the bicycle into/from the bicycle holding means 4. The bicycle carrying means 7 are set at least on one side of turning ends of the bicycle holding means 4.

The facility for parking bicycles and electric bicycles is controlled by a computer or more computers and all processes take place automatically. All the information needed for the customer are displayed on the display placed above the door of each tower.

### Brief Description of the Drawings

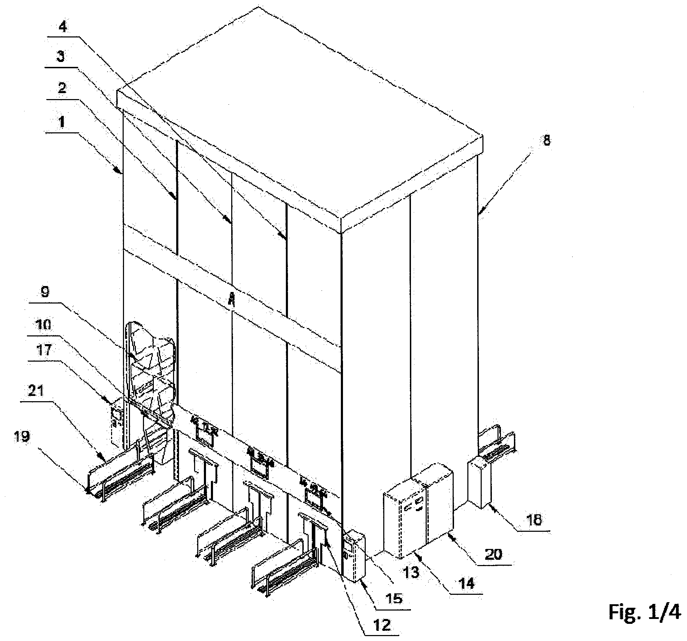

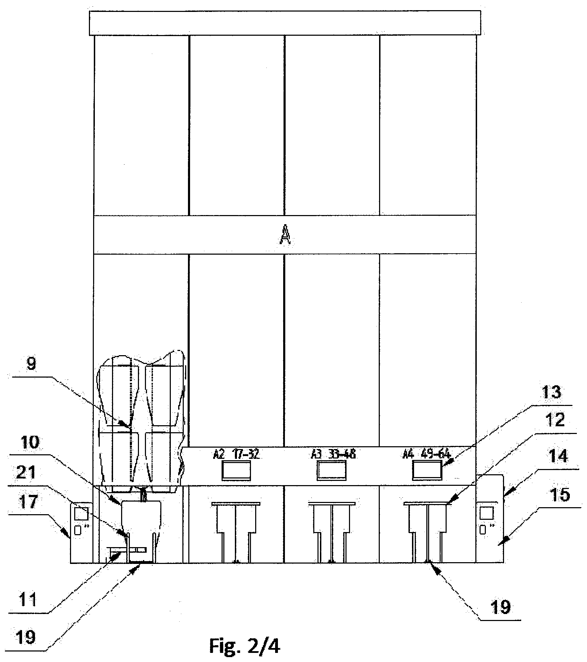

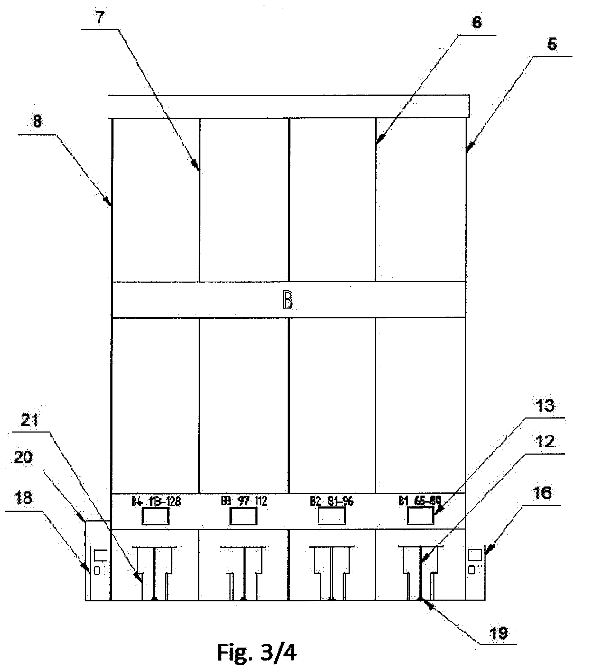

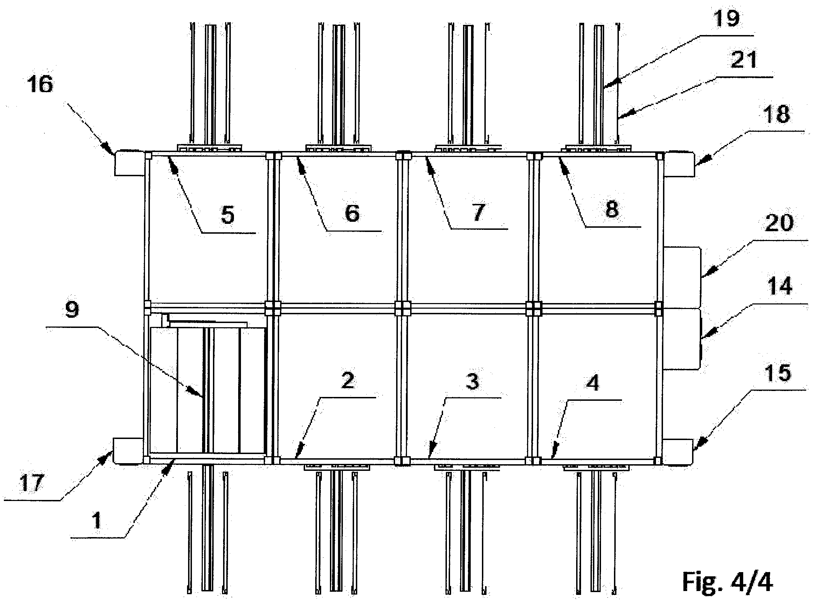

The technical solution will be further clarified by drawings, where fig. 1 shows a facility in axonometric view, fig. 2 shows a front view of the facility with partial section, fig. 3 shows the rear view of the facility and fig. 4 depicts a top view of the facility with a partial cut.

### Modes for carrying out the invention

The facility for parking bicycles and electric bicycles consists of 8 towers 1 to 8, four in two rows, of which each tower 1, 2 to 8 has a separate elevator 9 and 16 containers 10 for storage of bicycles.

Each tower 1 to 8 includes a door 12 for loading and unloading of the bicycles, behind which there is placed the manipulator 11 to safely intake and release the bicycles. Above each door 12 there is placed information screen 13. Towers 1 to 8 are connected with the cash box 14. Each row of towers, thus towers 1 to 4 and tower 5 to 8, are connected to each other with supply machine 15 and 16 and the intake machine 17 and 18. Before each door 12 there is a handrail 21, which forms a security corridor between the customer and the bicycle. Between handrails there is placed a homing bar 19 for the bicycle. The whole system is controlled by non-illustrated computer and is connected with one electric distribution board 20.

The above structural arrangement works as follows. The customer, the cyclist, pick up parking ticket at the entry terminal (intake machine) 17. On the ticket there is printed the number of the door 12 and the container number 10 to which the bicycle will be stored. The customer brings the bicycle to the respective door, which is half-open approximately on 100 mm, because door are opened right after picking up the ticket and using a homing bar 19 the cyclist slides the bicycle in between the door. Behind the door 12 there is ready a manipulator with an electromechanical hand that grips the front wheel. The command to grip the wheels will issue a photocell affixed to a manipulator 11. The sliding door 12 opens fully and a manipulator 11 drive the bicycle inside the tower and loads it into a container 10. The door 12 closes and the bicycle is parked. Before out-parking the customer shall pay the parking fee in the automatic cashier 14, and then the ticket shall insert into the exit terminal (supply machine). The lift starts and the bicycle is ready for collection, between the doors 12, which grip the bicycle for part of the front wheel, to ensure it against a fall.

When the customer comes for a bicycle, he is scanned by the photocell, which will give the command to the slightly opening of the door 12 so that it was possible to easily remove the bicycle. Customer passes the security corridor, and he leaves.

### Industrial applicability

This technical solution is usable in the cities, near the major shopping centres, near the train station and everywhere where there is a concentration of the cyclists with the need to store bicycles at a time quickly and safely into custody.

## Claims

1. Facility for parking bicycles and electric bicycles, wherein it consists of at least two towers (1, 2), wherein each of the at least two towers (1, 2) has a door (12) for loading and unloading of the bicycles, wherein before each door (12) there are placed handrails (21) that create a security corridor between the customer and bicycle, wherein between the handrails (21) there is placed a bar (19) adapted to home a bicycle between the hand rails (21), wherein behind the door (12) there is placed a manipulator (11) to safely intake and release the bicycles, each of the at least two towers (1,2) further comprises a separate elevator (9) and at least six containers (10) for the storage of bicycles, wherein each of the at least two towers (1, 2) has above every door (12) an information screen (12).

## Patentansprüche

1. Einrichtung zum Parken von Fahrrädern und Elektrofahrrädern, welche aus mindestens zwei Türmen (1, 2) besteht, wobei jeder der mindestens zwei Türme (1, 2) eine Tür (12) zum Be- und Entladen der Fahrräder aufweist, wobei vor jeder Tür (12) Handläufe (21) angeordnet sind, die einen Sicherheitskorridor zwischen dem Kunden und dem Fahrrad bilden, wobei zwischen den Handläufen (21) eine Stange (19) angeordnet ist, die geeignet ist, ein Fahrrad zwischen den Handläufen (21) aufzunehmen, wobei hinter der Tür (12) ein Manipulator (11) angeordnet ist, um die Fahrräder sicher aufzunehmen und freizugeben, wobei jeder der mindestens zwei Türme (1, 2) ferner einen separaten Aufzug (9) und mindestens sechs Behälter (10) für die Lagerung von Fahrrädern umfasst, wobei jeder der mindestens zwei Türme (1, 2) über jeder Tür (12) einen Informationsbildschirm (12) aufweist.

## Revendications

1. Installation pour le stationnement de bicyclettes et de bicyclettes électriques se composant de deux tours (1,2) au minimum où chacune des deux tours (1, 2) présente au minimum une porte (12) pour le chargement et le déchargement des bicyclettes où devant chaque porte (12) des mains courantes (21) sont disposées formant un corridor de sécurité entre le client et la bicyclette où entre les mains courantes (21) une tige (19) est disposée qui est appropriée pour inclure une bicyclette entre les mains courantes (21) où derrière la porte (12) un manipulateur (11) est disposé pour inclure les bicyclettes en toute sécurité et de les libérer où chacune des deux tours (1,2) au minimum comporte par ailleurs un ascenseur séparé (9) et au minimum six récipients (10) pour le stockage des bicyclettes où chacune des deux tours (1,2) au minimum présente au dessus de chaque porte (12) un écran virtuel d'informations (12).
